# EUROPEAN PATENT SPECIFICATION

(11) **EP 4 618 515 B1**
(45) Date of publication and mention of the grant of the patent: **12.08.2026**
(21) Application number: 24205278.5
(22) Date of filing: 08.10.2024
(51) Int. Cl.: H04L 67/12

(54) **SIGNAL CONVERSION DEVICE AND METHOD**
SIGNALUMWANDLUNGSVORRICHTUNG UND -VERFAHREN
DISPOSITIF ET PROCÉDÉ DE CONVERSION DE SIGNAL

(30) Priority: 12.03.2024 KR 20240034567
(43) Date of publication of application: 17.09.2025
(73) Proprietor: Hyundai Motor Company, Seoul 06797 (KR); Kia Corporation, Seocho-gu Seoul 06797 (KR); Yura Corporation Co., Ltd., Seongnam-si, Gyeonggi-do 13494 (KR)
(72) Inventor: CHUNG, Hyun Baek, Hwaseong-si, Gyeonggi-do 18280 (KR); PARK, Chang Wook, Hwaseong-si, Gyeonggi-do 18280 (KR); KIM, Beon Chang, Hwaseong-si, Gyeonggi-do 18280 (KR); LEE, Dong Kun, Hwaseong-si, Gyeonggi-do 18280 (KR); PARK, Hou Jun, Hwaseong-si, Gyeonggi-do 18280 (KR); JEON, Yong Won, Hwaseong-si, Gyeonggi-do 18280 (KR); LIM, Tae Won, Yongin-si, Gyeonggi-do 16990 (KR)
(74) Representative: Isarpatent

(56) References cited:
- US-A1- 2016 205 521
- US-A1- 2019 132 424
- US-B2- 7 660 934

## Description

### TECHNICAL FIELD

The present disclosure relates to a signal conversion device and method and more specifically relates to a signal conversion technology.

### BACKGROUND

Recently, there has been a growing importance of interlocking the functions of a special equipment vehicle with the states and functions of a vehicle. The special equipment vehicle refers to a vehicle that includes special equipment and structure to perform special tasks.

In particular, in the past, there was an issue of high costs being incurred by using an analog-type communication protocol to perform the functions of the special equipment vehicle. Recently, as the default functions of a vehicle before producing a special equipment vehicle have become more diverse, there has been a problem in responding to the design and/or production of special equipment vehicles.

US 2019/132424 A1 relates to an apparatus and a method for converting a protocol by a type of data and a vehicle system.

### SUMMARY

The present disclosure has been made to solve the above-mentioned problems occurring in the prior art while advantages achieved by the prior art are maintained intact.

An aspect of the present disclosure provides a signal conversion device and a signal conversion method for converting a signal transmitted from a vehicle into a signal using a protocol used by a special equipment controller.

An aspect of the present disclosure provides a signal conversion device and a signal conversion device method for reducing the cost of producing various special equipment vehicles by converting a signal transmitted from a vehicle into a signal used by a special equipment controller.

An aspect of the present disclosure provides a signal conversion device and a signal conversion method for providing a vehicle capable of being customized by a user by mapping a user-desired function to a vehicle control signal.

The technical problems to be solved by the present disclosure are not limited to the aforementioned problems. Any other technical problems not mentioned herein should be clearly understood from the following description by those having ordinary skill in the art to which the present disclosure pertains.

According to the present invention, a signal conversion device includes a communication circuit and a processor, as defined by independent claim 1. The processor converts a first signal into a second signal using at least one of a first protocol, a second protocol different from the first protocol, or any combination thereof, by receiving the first signal using the first protocol from a vehicle through the communication circuit. The processor also transmits the second signal to an external electronic device connected to the vehicle. The first signal includes a vehicle control signal generated by the vehicle, and the vehicle control signal corresponds to a specified function executed by the external electronic device. The second signal includes a message for allowing the external electronic device to execute the specified function. The external electronic device includes a special equipment vehicle controller including a controller for executing additional functions that are different from a default functions of the vehicle.

According to an embodiment, the processor may identify a protocol through which transmission and reception are possible via a port to which the external electronic device is connected among the first protocol, the second protocol, or any combination thereof, by identifying the port to which the external electronic device is connected. The processor may also convert the first signal into the second signal using the protocol through which transmission and reception are possible.

According to an embodiment, the signal conversion device may further include a memory, and the processor may convert the first signal into the second signal based on a conversion table stored in the memory.

According to an embodiment, the first protocol may include at least one of a controller area network (CAN), a local interconnect network (LIN), Ethernet, or any combination thereof. The second protocol may include an RS-232C protocol, an RS-422 protocol, an RS-485 protocol, an analog I/O (input/output) protocol, a near field communication (NFC) protocol, an ultra-wideband (UWB) protocol, a dedicated short-range communication (DSRC) protocol, a wireless access in vehicular environments (WAVE) protocol, a cellular vehicle-to-everything (C-V2X) protocol, a standardized mobile communication protocol, or any combination thereof.

According to an embodiment, the processor may convert an encrypted first signal into the second signal by encrypting the first signal.

According to an embodiment, the processor may encrypt the first signal based on a symmetric key algorithm, a public key algorithm, or any combination thereof. The processor may also convert the encrypted first signal into the second signal by encrypting the first signal.

According to an embodiment, the processor may identify an identifier assigned to the external electronic device. The processor may also perform, on the second signal, at least one of transmission to the external electronic device, reception from the external electronic device, or any combination thereof, by identifying that the external electronic device is accessible to the vehicle through the identifier.

According to an embodiment, the identifier assigned to the external electronic device may include at least one of a unique device identifier assigned to the external electronic device, a manufacturer identifier associated with a manufacturer that has manufactured the external electronic device, or any combination thereof.

According to an embodiment, the processor may search for a first signal corresponding to the specified function in the vehicle by receiving a user input for executing the specified function from the external electronic device. The processor may also convert the searched first signal into a second signal that causes the external electronic device to execute the specified function. The processor may also transmit the second signal to the external electronic device.

According to an embodiment, the processor may express the second signal in a binary format and transmit the second signal in the binary format to the electronic device in bit units.

According to an embodiment, the signal conversion device may further include a plurality of ports. Protocols are set for signals to be respectively transmitted via the plurality of ports by a second electronic device that is different from the electronic device included in a first electronic device.

According to the present invention, a signal conversion method, as defined by independent claim 12, includes converting, by a processor, a first signal into a second signal using at least one of a first protocol, a second protocol different from the first protocol, or any combination thereof, by receiving the first signal using the first protocol from a vehicle through a communication circuit. The signal conversion method also includes transmitting, by the processor, the second signal to an external electronic device connected to the vehicle. The first signal includes a vehicle control signal generated by the vehicle, and the vehicle control signal corresponds to a specified function executed by the external electronic device. The second signal includes a message for allowing the external electronic device to execute the specified function. The external electronic device includes a special equipment vehicle controller including a controller for executing additional functions that are different from a default functions of the vehicle.

According to an embodiment, the signal conversion method may further include identifying a protocol through which transmission and reception are possible via a port to which the external electronic device is connected among the first protocol, the second protocol, or any combination thereof, by identifying the port to which the external electronic device is connected. The signal conversion method also includes converting the first signal into the second signal using the protocol through which transmission and reception are possible.

According to an embodiment, the signal conversion method may further include converting the first signal into the second signal based on a conversion table stored in a memory.

According to an embodiment, the first protocol may include at least one of a controller area network (CAN), a local interconnect network (LIN), Ethernet, or any combination thereof. The second protocol may include an RS-232C protocol, an RS-422 protocol, an RS-485 protocol, an analog I/O (input/output) protocol, a near field communication (NFC) protocol, an ultra-wideband (UWB) protocol, a dedicated short-range communication (DSRC) protocol, a wireless access in vehicular environments (WAVE) protocol, a cellular vehicle-to-everything (C-V2X) protocol, a standardized mobile communication protocol, or any combination thereof.

According to an embodiment, the signal conversion method may further include converting an encrypted first signal into the second signal by encrypting the first signal.

According to an embodiment, the signal conversion method may further include encrypting the first signal based on a symmetric key algorithm, a public key algorithm, or any combination thereof. The signal conversion method may further include converting the encrypted first signal into the second signal by encrypting the first signal.

According to an embodiment, the signal conversion method may further include identifying an identifier assigned to the external electronic device. The signal conversion method may further include performing, on the second signal, at least one of transmission to the external electronic device, reception from the external electronic device, or any combination thereof, by identifying that the external electronic device is accessible to the vehicle through the identifier.

According to an embodiment, the identifier assigned to the external electronic device may include at least one of a unique device identifier assigned to the electronic device, a manufacturer identifier associated with a manufacturer that has manufactured the electronic device, or any combination thereof.

According to an embodiment, the signal conversion method may further include searching for a first signal corresponding to the specified function in the vehicle by receiving a user input for executing the specified function from the external electronic device. The external electronic device may further include converting the searched first signal into a second signal that causes the external electronic device to execute the specified function. The external electronic device may further include transmitting the second signal to the external electronic device.

### BRIEF DESCRIPTION OF THE DRAWINGS

The above and other objects, features, and advantages of the present disclosure should be more apparent from the following detailed description taken in conjunction with the accompanying drawings:
FIG. 1 illustrates an example of a block diagram related to a signal conversion device according to one embodiment of the present disclosure;
FIG. 2A shows an example of a signal flow among a signal conversion device, a vehicle, and a special equipment controller according to one embodiment of the present disclosure;
FIG. 2B shows an example of a block diagram related to a signal conversion device, a vehicle, and a special equipment controller according to one embodiment of the present disclosure;
FIG. 2C shows an example of a signal conversion device according to one embodiment of the present disclosure;
FIG. 3A shows an example of a block diagram related to a signal conversion system according to one embodiment of the present disclosure;
FIG. 3B shows an example of a signal conversion system according to one embodiment of the present disclosure;
FIG. 4 shows an example of a signal conversion device according to one embodiment of the present disclosure;
FIG. 5 shows an example of a signal transmitted to an external electronic device by a signal conversion device according to one embodiment of the present disclosure;
FIG. 6 shows an example of a flowchart related to a signal conversion method according to one embodiment of the present disclosure; and
FIG. 7 illustrates a computing system related to a signal conversion device or a signal conversion method according to one embodiment of the present disclosure.

### DETAILED DESCRIPTION

Hereinafter, some embodiments of the present disclosure are described in detail with reference to the drawings. When the reference numerals to the components of each drawing are added, it should be noted that the identical or equivalent components are designated by the identical numeral even if the components are displayed on other drawings. Further, in describing the embodiment of the present disclosure, a detailed description of well-known features or functions has been omitted in order not to unnecessarily obscure the gist of the present disclosure.

In describing the components of the embodiment according to the present disclosure, terms such as first, second, "A", "B", (a), (b), and the like may be used. These terms are merely intended to distinguish one component from another component, and the terms do not limit the nature, sequence, or order of the constituent components. Unless otherwise defined, all terms used herein, including technical or scientific terms, have the same meanings as those generally understood by those having ordinary skill in the art to which the present disclosure pertains. Such terms as those defined in a generally used dictionary should be interpreted as having meanings equal to the contextual meanings in the relevant field of art. Such terms should not be interpreted as having ideal or excessively formal meanings unless clearly defined as having such in the present disclosure.

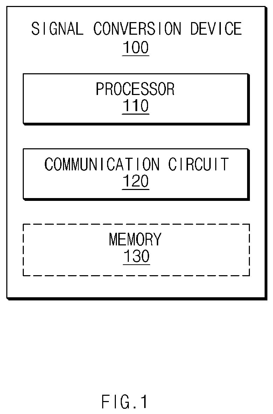

Hereinafter, embodiments of the present disclosure are described in detail with reference to FIGS. 1-7.

FIG. 1 illustrates an example of a block diagram related to a signal conversion device according to one embodiment of the present disclosure. When a controller, module, component, device, element, or the like of the present disclosure is described as having a purpose or performing an operation, function, or the like, the controller, module, component, device, element, or the like should be considered herein as being "configured to" meet that purpose or to perform that operation or function. Each controller, module, component, device, element, and the like may separately embody or be included with a processor and a memory, such as a non-transitory computer readable media, as part of the apparatus.

Referring to FIG. 1, a signal conversion device 100 according to one embodiment of the present disclosure may be implemented inside or outside a vehicle. Part of components included in the signal conversion device 100 may be implemented inside or outside the vehicle. In this case, the signal conversion device 100 may be integrally formed with internal control units of the vehicle or may be implemented as a separate device and connected to the control units of the vehicle by separate connection means. For example, the signal conversion device 100 may further include components not shown in FIG. 1.

The signal conversion device 100 of the present disclosure may be referred to as a conversion interface module (CIM). The signal conversion device 100 may include at least one of a conversion interface module master (CIMM), a conversion interface module slave (CIMS), or any combination thereof. At least one of the CIM, the CIMM, or the CIMS, described above or any combination thereof may include a micro controller unit (MCU).

The signal conversion device 100 according to one embodiment may include a processor 110 and a communication circuit 120. According to one embodiment, the signal conversion device 100 may include a memory 130. The processor 110, the communication circuit 120, or the memory 130 may be electronically and/or operably coupled with each other by an electronical component including a communication bus.

Hereinafter, hardware being operably combined may include that a direct connection and/or an indirect connection, between the hardware is established, wired and/or wirelessly, such that second hardware is controlled by first hardware among the hardware.

Although shown in separate blocks, embodiments are not limited thereto. A part of the pieces of hardware of FIG. 1 may be included in a single integrated circuit, including a system on a chip (SoC). The types and/or the number of pieces of hardware included within signal conversion device 100 are not limited to those shown in FIG. 1. For example, the signal conversion device 100 may include only a part of the hardware shown in FIG. 1.

The signal conversion device 100 according to one embodiment may include hardware for processing data based on one or more instructions. The hardware for processing the data may include the processor 110.

For example, the hardware for processing data may include an arithmetic and logic unit (ALU), a floating point unit (FPU), a field programmable gate array (FPGA), a central processing unit (CPU), and/or an application processor (AP). The processor 110 may have the structure of a single-core processor, the structure of a multi-core processor including dual core, quad core, hexa core, or octa core. However, embodiments of the present disclosure are not limited to the above.

According to one embodiment, the communication circuit 120 of the signal conversion device 100 may include a hardware component for supporting the transmission and/or the reception of signals between the signal conversion device 100 and an external electronic device. For example, the communication circuit 120 may include at least one of a modem, an antenna, an optic/electronic (O/E) converter, or any combination thereof.

In the following description, the external electronic device is intended to refer to a device different from the signal conversion device 100 and may be implemented inside and/or outside a vehicle. Accordingly, an external electronic device may be referred to as an electronic device.

For example, the communication circuit 120 may support the transmission or reception of signals based on various types of protocols, including at least one of Ethernet, local area network (LAN), wide area network (WAN), wireless fidelity (WiFi), Bluetooth, Bluetooth low energy (BLE), ZigBee, long term evolution (LTE), 5G new radio (NR), controller area network (CAN), or local interconnect network (LIN), or any combination thereof. However, embodiments of the present disclosure are not limited to what described above.

According to one embodiment, the memory 130 of the signal conversion device 100 may include hardware components for storing data and/or instructions that are input to and/or output from the processor 110 of the signal conversion device 100.

For example, the memory 130 may include a volatile memory including a random-access memory (RAM) or may include a non-volatile memory including a read-only memory (ROM).

For example, the volatile memory may include at least one of dynamic RAM (DRAM), static RAM (SRAM), cache RAM, pseudo SRAM (PSRAM), or any combination thereof.

For example, the non-volatile memory may include at least one of programmable ROM (PROM), erasable PROM (EPROM), electrically erasable PROM (EEPROM), flash memory, hard disk, compact disc, solid state drive (SSD), embedded multi-media card (eMMC), or any combination thereof. However, embodiments of the present disclosure are not limited to what described above.

For example, the memory 130 of the signal conversion device 100 may store one or more instructions indicating arithmetic operations and/or operations to be performed on data by the processor 110 of the signal conversion device 100. A set of one or more instructions may be referred to as a program, firmware, operating system, process, routine, sub-routine, and/or application. Hereinafter, an application being installed in the signal conversion device 100 may mean that one or more instructions provided in the form of an application are stored in the memory 130, and one or more applications are stored in an executable format (e.g., a file with an extension specified by the operating system of the signal conversion device 100) by the processor 110 of the signal conversion device 100.

According to one embodiment, the signal conversion device 100 may include the communication circuit 120 and the processor 110. For example, the processor 110 may receive a first signal using a first protocol from a vehicle via the communication circuit 120. For example, the signal conversion device 100 may be located in at least a part of the vehicle and may receive a first signal using the first protocol while being connected to the vehicle.

For example, the first signal may correspond to a specified function to be executed by an external electronic device in the vehicle and may include a vehicle control signal generated by the vehicle.

For example, the first signal may include a signal related to the state of the vehicle. For example, the first signal may include a signal indicating that the state of the vehicle changes from a first state to one of states different from the first state. For example, the first signal may include a signal indicating that a vehicle ignition is turned off. For example, the first signal may include a B+ signal of the vehicle. For example, the first signal may include an ACC signal. For example, the first signal may include at least one of an Ig (ignition) 1 signal, an Ig 2 signal, or any combination thereof.

For example, the first signal may include a signal related to a transmission gear included in the vehicle. For example, the first signal may include a signal indicating that the transmission gear included in the vehicle is changed to P gear. For example, the first signal may include a signal indicating that the transmission gear included in the vehicle is changed to R gear.

For example, the first signal may include a signal related to controlling vehicle doors included in the vehicle. For example, the first signal may include a signal for unlocking at least one of the vehicle doors using a smart key. For example, the first signal may include a signal that causes the left slide door of the vehicle doors to be opened. For example, the first signal may include a signal that causes the right slide door of the vehicle doors to be opened. For example, the first signal may include a signal that causes the tailgate to be opened.

For example, the first signal may include a signal related to the operation of the brake. For example, the first signal may include a signal that causes braking of the vehicle by operating the brake.

For example, the first signal may include a signal related to a turn signal lamp.

For example, the first signal may include a signal related to the speed of the vehicle. For example, the first signal may include a signal corresponding to the speed of the vehicle. For example, the first signal may include a signal indicating the speed of the vehicle.

For example, the first signal may include a signal related to controlling a light inside the vehicle. For example, the first signal may include a signal for turning on or turning off a light inside the vehicle.

For example, the first signal may include a signal related to controlling an air conditioner.

As described above, the first signal may include at least one of a signal related to the state of the vehicle, a signal related to the transmission gear included in the vehicle, a signal related to the control of vehicle doors using a smart key, a signal related to the operation of the brake, a signal related to the speed of the vehicle, a signal related to control of a light inside the vehicle, a signal related to control of an air conditioner, or any combination thereof. However, embodiments of the present disclosure are not limited to what described above.

For example, the first protocol may include a communication protocol for executing functions installed in the vehicle, within the vehicle. For example, the first protocol may include at least one of CAN, LIN, Ethernet, or any combination thereof.

According to one embodiment, the processor 110 may convert the first signal into a second signal using at least one of a first protocol, a second protocol different from the first protocol, or any combination thereof, based on receiving the first signal.

For example, the second protocol may include a communication protocol used in an external electronic device.

For example, the second protocol may include at least one of RS-232, RS-232C, RS-422, RS-485, or analog input/output (I/O), or any combination thereof.

For example, the first protocol and/or the second protocol may include at least one of near field communication (NFC), ultra-wideband (UWB), 6G, dedicated short-range communication (DSRC), wireless access in vehicular environments (WAVE), C-V2X (cellular vehicle-to-everything), or any combination thereof. However, embodiments of the present disclosure are not limited to what described above. For example, the first protocol and/or the second protocol may include standardized mobile communication technology (or a standardized mobile communication protocol).

For example, the external electronic device may include a special equipment vehicle controller.

For example, the special equipment vehicle controller may include a controller for executing additional functions that are different from the default functions of the vehicle. For example, additional functions may include functions that are executed based on additional specifications added to the default specifications of the vehicle. For example, additional functions may include a function executed by at least one of a limousine, a camper, an ambulance, a daycare center vehicle, a refrigerated vehicle, a mobile fuel vehicle, a wing body vehicle, a dump truck (a dump truck), or any combination thereof.

For example, the special equipment vehicle controller may control hardware components additionally installed in the vehicle. However, embodiments of the present disclosure are not limited to what described above.

For example, the second signal may include a message for executing a function specified by an external electronic device. For example, the specified function to be executed by an external electronic device may include a function to be executed in the vehicle by the external electronic device. For example, the message may include an instruction and/or a command to be executed by the external electronic device. For example, the message may include a data packet for exchanging information between various control systems. For example, the message may include information (or data) related to an identifier, data, control, and/or error checking.

For example, the processor 110 of the signal conversion device 100 may acquire a second signal corresponding to the first signal by converting the first signal related to at least one of the signal related to the state of the vehicle, the signal related to the transmission gear included in the vehicle, the signal related to the control of vehicle doors using a smart key, the signal related to the operation of the brake, the signal related to the speed of the vehicle, the signal related to control of a light inside the vehicle, the signal related to control of the air conditioner, or any combination thereof.

For example, the second signal may include a signal related to the state of special equipment provided in the vehicle, which corresponds to a signal related to the state of the vehicle. For example, the signal related to the status of the special equipment may include at least one of a signal related to the power of the special equipment, a signal related to the light of the special equipment, a signal related to the mode of the special equipment, a signal related to the conditions of use of the special equipment, or any combination thereof.

For example, the second signal may include a signal related to the operation condition of the electric side step of the special equipment, corresponding to a signal indicating that the transmission gear included in the vehicle is changed to P gear.

For example, the second signal may include a signal for operating a rear camera and/or a reverse sound, corresponding to a signal indicating that the transmission gear included in the vehicle is changed to R gear.

For example, the second signal may include a signal for causing booting of a monitor disposed in the rear seat of the vehicle, corresponding to a signal for unlocking at least one of the vehicle doors.

For example, the second signal may include a signal for turning on the central flash of the special equipment, corresponding to a signal that causes the left slide door of the vehicle doors to be opened.

For example, the second signal may include a signal for turning on the central flash of the special equipment, corresponding to a signal that causes the right slide door of the vehicle doors to be opened.

For example, the second signal may include a signal for turning on the central flash of the special equipment, corresponding to the signal that causes the tailgate to be opened.

For example, the second signal may include a signal related to the operating conditions of the safety components included in a smart bed and/or a smart room, corresponding to a signal related to the operation of the brake.

For example, the second signal may include a signal related to the visibility of an indoor turn signal light that corresponds to a signal related to the turn signal light.

For example, the second signal may include a signal related to the color of a speed-responsive ambient mood light, which corresponds to a signal related to the speed of the vehicle.

For example, the second signal may include a signal related to control of a light inside the vehicle, which corresponds to a signal related to control of the light inside the vehicle.

For example, the second signal may include a signal related to control of the special equipment, which corresponds to a signal related to control of an air conditioner.

As described above, the second signal may include at least one of a signal related to the state of the special equipment provided in the vehicle, a signal related to the operating conditions of the electric side step of the special equipment, a signal for operating the rear camera and/or the reverse sound, a signal that causes the booting of the monitor disposed in the rear seat of the vehicle, a signal for turning on the central flash of the special equipment, a signal related to the operating conditions of the safety components included in the smart bed and/or the smart room, a signal related to the visibility of an indoor turn signal light, a signal related to the color of a speed-responsive ambient mood light, a signal related to the control of the light inside the special equipment, a signal related to the control of the special equipment, or any combination thereof. However, embodiments of the present disclosure are not limited to what described above.

According to one embodiment, if converting a first signal into a second signal, the processor 110 may convert the first signal into the second signal based on an encryption engine. For example, the processor 110 may convert the first signal into the second signal based on a conversion table stored in the memory 130.

For example, the processor 110 may convert the first signal into the second signal based on encrypting the first signal. For example, the processor 110 may convert the first signal into the second signal by encrypting the first signal based on the conversion table stored in the memory 130.

For example, the conversion table may include a table indicating a second signal corresponding to the first signal. For example, the conversion table may include a table that maps a first protocol to a second protocol used in an external electronic device.

For example, the processor 110 may encrypt the first signal based on at least one of a symmetric key algorithm, a public key algorithm, or any combination thereof. For example, the processor 110 may convert the encrypted first signal into a second signal based on encrypting the first signal.

For example, the symmetric key algorithm may include advanced encryption standard (AES).

For example, the processor 110 may encrypt the first signal based on at least one of a specified key length, a specified block length, a specified number of rounds, or any combination thereof.

For example, when encrypting the first signal, the processor 110 may encrypt the first signal based on a cipher block chaining (CBC) mode included in the block cipher mode. For example, the processor 110 may encrypt the first signal by performing an XOR operation on the ciphertext block corresponding to the first signal.

As described above, the processor 110 of the signal conversion device 100 according to one embodiment may ensure the integrity and/or confidentiality of the first signal by encrypting the first signal based on the CBC mode.

In one embodiment, the processor 110 may transmit the second signal to an external electronic device connected to the vehicle by converting the first signal into the second signal.

According to one embodiment, the signal conversion device 100 may include a plurality of ports including a first port and a second port. For example, the first port may be connected to a vehicle. For example, the second port may be connected to an external electronic device.

For example, the processor 110 of the signal conversion device 100 may identify the external electronic device connected to the second port. For example, the processor 110 may receive the first signal through at least one of the first port, the communication circuit 120, or any combination thereof, based on identifying the external electronic device connected to the second port.

For example, the processor 110 may identify a protocol, which the external electronic device is able to execute (use) by receiving the first signal. For example, the processor 110 may identify a protocol, which the external electronic device is able to execute (use) based on the second port to which the external electronic device is connected.

For example, the processor 110 may identify a protocol through which transmission and reception are possible via the second port among the first protocol, or the second protocol, any combination thereof, by identifying the second port to which the external electronic device is connected. The processor 110 may convert the first signal into a second signal using a protocol through which transmission and reception are possible via the second port.

For example, the processor 110 may convert the first signal into a second signal, which uses a protocol executable by the external electronic device, by identifying the protocol executable by the external electronic device.

According to one embodiment, the processor 110 may identify an identifier assigned to an external electronic device. For example, the identifier assigned to the external electronic device may include at least one of a unique device identifier assigned to the external electronic device, an identifier related to the manufacturer that manufactured the external electronic device, or any combination thereof.

For example, the unique device identifier assigned to the external electronic device may include a serial number assigned when the external electronic device is manufactured.

According to one embodiment, the processor 110 may identify whether the external electronic device is able to access (or connect to) the vehicle using an identifier. The processor 110 may transmit the second signal to the external electronic device based on the identifier identifying the external electronic device as being accessible (or connectable) to the vehicle.

For example, the processor 110 may not transmit the second signal to the external electronic device based on the identifier identifying the external electronic device as not being accessible (or connectable) to the vehicle.

In one embodiment, the processor 110 may receive a user input for executing a specified function from the external electronic device. The processor 110 may search for the first signal corresponding to the specified function in the vehicle by receiving a user input for executing the specified function from the external electronic device.

For example, the processor 110 may convert the searched first signal into a second signal that causes the specified function to be executed in the external electronic device. The processor 110 may transmit the second signal to the external electronic device.

In one embodiment, the processor 110 may express the second signal in a binary format and may transmit the second signal in the binary format to the external electronic device in bit units. For example, the processor 110 may transmit the second signal to the external electronic device in bit units with a specified length. For example, a bit unit of a specified length may include approximately 2 bits.

As described above, the processor 110 of the signal conversion device 100 according to one embodiment may perform the operations described above while the vehicle is traveling (or being operated). Furthermore, according to one embodiment, the processor 110 of the signal conversion device 100 may perform the operations described above even if the vehicle is stopped and/or even in a nonstarting state. However, embodiments of the present disclosure are not limited to the above.

The signal conversion device 100 may convert a signal transmitted from the vehicle (e.g., vehicle control signal) into a signal of a protocol usable by the external electronic device (e.g., special equipment controller). Thus, costs for producing the special equipment vehicle may be reduced.

Specifically, when a vehicle for manufacturing the special equipment vehicle is produced, the signal conversion device 100 is included in the vehicle to integrate the wiring structure of the vehicle and thus provides the effect of reducing the production cost of the special equipment vehicle.

In addition, from the perspective of companies producing special equipment vehicle, conventionally, to develop a special equipment controller according to the type of a special equipment vehicle, development costs (or investment costs) were invested to develop special equipment controllers respectively corresponding to models of vehicles. By using the signal conversion device 100 according to the present disclosure, it is possible to provide the effect of executing special equipment functions for multiple vehicle models using a special equipment controller for executing a specified function. Thus, development costs (or investment costs) may be reduced.

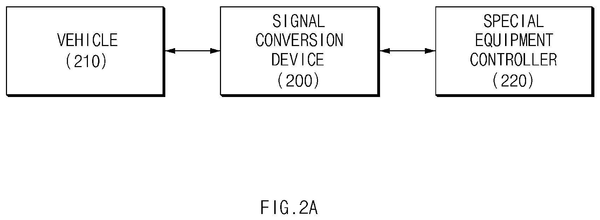

FIG. 2A shows an example of a signal flow among a signal conversion device, a vehicle, and a special equipment controller according to one embodiment of the present disclosure.

Referring to FIG. 2A, a signal conversion device 200 (e.g., the signal conversion device 100 of FIG. 1) according to one embodiment may be connected to a vehicle 210 and/or a special equipment controller 220 through a communication circuit (e.g., the communication circuit 120 of FIG. 1). For example, the special equipment controller 220 may be included in the external electronic device described in FIG. 1.

For example, the signal conversion device 200 may be directly and/or indirectly connected to the vehicle 210 and/or the special equipment controller 220. For example, direct connection to the vehicle 210 and/or the special equipment controller 220 may include direct connections between devices, by hardware components including ports and/or cables.

For example, the signal conversion device 200 may establish a communication link with the vehicle 210 and/or the special equipment controller 220. For example, the signal conversion device 200 may perform operations described below by establishing the communication link with the vehicle 210 and/or the special equipment controller 220.

For example, signals may be transmitted and/or received between the signal conversion device 200 and the vehicle 210. For example, the signals may be transmitted and/or received between the signal conversion device 200 and the special equipment controller 220.

For example, the processor of the signal conversion device 200 (e.g., processor 110 of FIG. 1) may receive signals, data, and/or information from the vehicle 210 and/or the special equipment controller 220 via a communication circuit, a port, and/or a cable.

For example, the processor of signal conversion device 200 may transmit signals, data, and/or information to the vehicle 210 and/or the special equipment controller 220 via a communication circuit, a port, and/or a cable.

In one embodiment, the processor of the signal conversion device 200 may receive a vehicle control signal related to control of the vehicle 210 from the vehicle 210. The processor may identify the special equipment control signal of the special equipment controller 220 that corresponds to the vehicle control signal.

In one embodiment, the processor may identify a port to which the special equipment controller 220 is connected among the ports of the signal conversion device 200. For example, the ports of the signal conversion device 200 may transmit and/or receive signals using a specified protocol.

For example, the processor may transmit a second signal acquired by converting a first signal transmitted from the vehicle 210 into a protocol through which transmission and reception are possible via a port to which the special equipment controller 220 is connected, and by identifying the protocol in which transmission and/or reception are possible at a port to which the special equipment controller 220 is connected, among ports of the signal conversion device 200.

The special equipment controller 220 that has received the second signal may control the special equipment mounted on the vehicle 210. For example, the special equipment controller 220 may execute a specified function of the special equipment corresponding to the first signal transmitted from the vehicle 210 and mounted on the vehicle 210.

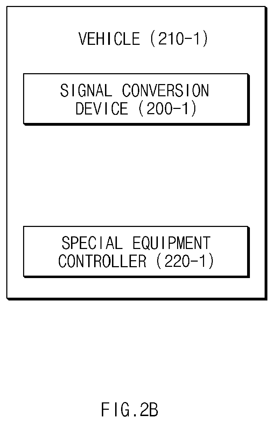

FIG. 2B shows an example of a block diagram related to a signal conversion device, a vehicle, and a special equipment controller according to one embodiment of the present disclosure.

Referring to FIG. 2B, in one embodiment, a vehicle 210-1 may include a signal conversion device 200-1 (e.g., the signal conversion device 100 of FIG. 1 and/or the signal conversion device 200 of FIG. 2A) and a special equipment controller 220-1.

For example, the signal conversion device 200-1 may be disposed inside and/or outside the vehicle 210-1 and may receive a signal from the vehicle 210-1 or may transmit a signal to the vehicle 210-1.

For example, the signal conversion device 200-1 may convert a first signal into a second signal using at least one of a first protocol, second protocol, or any combination thereof by obtaining the first signal using the first protocol from the vehicle 210-1. The signal conversion device 200-1 may transmit the second signal to the special equipment controller 220-1.

For example, the signal conversion device 200-1 may receive a request signal requesting a signal related to a specified function executed in the vehicle 210-1 from the special equipment controller 220-1. The signal conversion device 200-1 may transmit a request signal related to the specified function to the vehicle 210-1 in response to the request signal.

For example, the signal conversion device 200-1 may convert a signal related to the specified function transmitted from the vehicle 210-1 in response to the request signal and then may transmit the converted signal to the special equipment controller 220-1. For example, the signal conversion device 200-1 may convert the signal related to the specified function transmitted from the vehicle 210-1 into a usable signal by the special equipment controller 220-1 and then may transmit the converted signal to the special equipment controller 220-1.

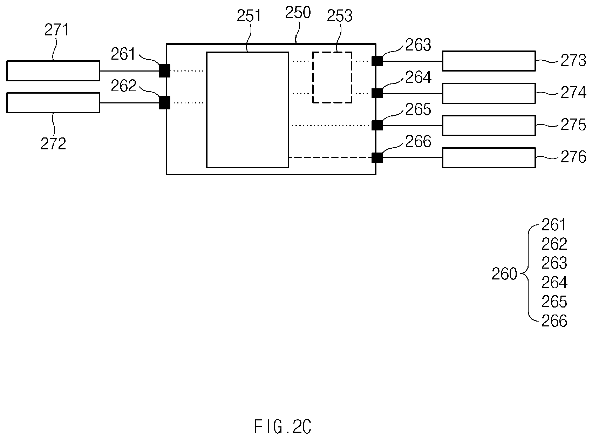

FIG. 2C shows an example of a signal conversion device according to one embodiment of the present disclosure.

Referring to FIG. 2C, a signal conversion device 250 (e.g., the signal conversion device 100 of FIG. 1 and/or the signal conversion device 200 of FIG. 2A) according to one embodiment may include a processor 251 (the processor 110 of FIG. 1). The signal conversion device 250 may include an encryption engine 253.

The processor 251 of the signal conversion device 250 according to one embodiment may include a plurality of ports 260. For example, the processor 251 may identify a first port 261 and/or a second port 262 connected to the vehicle (e.g., vehicle 210 in FIG. 2A) among the plurality of ports 260. For example, the processor 251 may identify a third port 263, a fourth port 264, a fifth port 265, and/or a sixth port 266 connected to an external electronic device (e.g., the special equipment controller 220).

In one embodiment, the processor 251 may receive a signal 271 related to the state of the vehicle, including a B+ signal, an Ig 1 signal, and/or an Ig 2 signal, from the vehicle via the first port 261. For example, the processor 251 may receive a signal 272 related to a vehicle network via the second port 262. Although two ports connected to the vehicle are shown in FIG. 2B, embodiments are not limited thereto.

In one embodiment, the processor 251 may transmit a signal 273 using the CAN protocol to an external electronic device via the third port 263. The processor 251 may transmit a signal 274 using the RS232 protocol through via the fourth port 264. The processor 251 may transmit a signal 275 using analog I/O via the fifth port 265. The processor 251 may transmit a signal 276 using another interface via the sixth port 266. Although FIG. 2C shows four ports connected to the external electronic device, embodiments are not limited thereto.

As described above, the signal conversion device 250 according to one embodiment may specify signals to be transmitted and/or received via ports, respectively. The signal conversion device 250 may convert a signal transmitted from the vehicle into a signal using a protocol executable by an external electronic device by transmitting and/or receiving signals using different protocols via the ports. The signal conversion device 250 may convert a signal transmitted from the vehicle into a signal using a protocol executable by an external electronic device. Thus, the effect of allowing various external electronic devices to execute a specified function according to the signal transmitted from the vehicle may be provided.

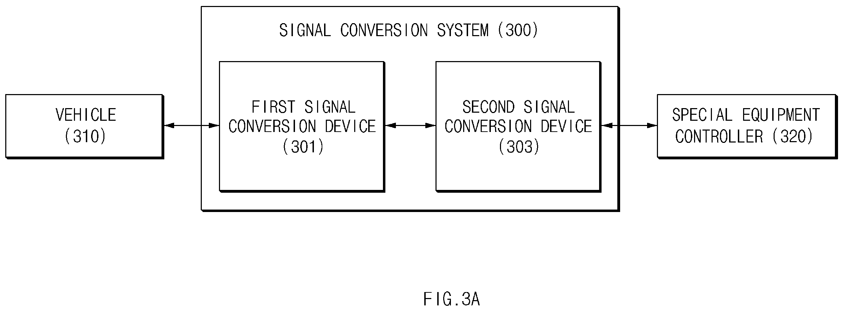

FIG. 3A shows an example of a block diagram related to a signal conversion system according to one embodiment of the present disclosure.

Referring to FIG. 3A, in one embodiment, a signal conversion system 300 may include a first signal conversion device 301 (e.g., the signal conversion device 100 of FIG. 1, the signal conversion device 200 of FIG. 2A, and/or the signal conversion device 251 of FIG. 2B) and/or a second signal conversion device 303 (e.g., the signal conversion device 100 of FIG. 1, the signal conversion device 200 of FIG. 2A, and /or the signal conversion device 251 of FIG. 2B). For example, the first signal conversion device 301 may be referred to as a conversion interface module master (CIMM). For example, the second signal conversion device 303 may be referred to as a conversion interface module slave (CIMS).

For example, direct and/or indirect connection with a vehicle 310 (e.g., vehicle 210 in FIG. 2A) and/or a special equipment controller 320 (e.g., the special equipment controller 220 in FIG. 2A) of the signal conversion system 300 may be available. The first signal conversion device 301 included in the signal conversion system 300 may be directly and/or indirectly connected to the vehicle 310. The second signal conversion device 303 included in the signal conversion system 300 may be directly and/or indirectly connected to the special equipment controller 320.

For example, the first signal conversion device 301 may encrypt a signal transmitted from the vehicle 310. For example, the first signal conversion device 301 may encrypt a signal transmitted from the vehicle 310 based on a first encryption engine included in the first signal conversion device 301.

For example, the first signal conversion device 301 may transmit the encrypted signal to the second signal conversion device 303 by encrypting the signal transmitted from the vehicle 310. The second signal conversion device 303, which has received the encrypted signal, may convert the encrypted signal into a signal, which uses a protocol executable by the special equipment controller 320.

The protocol used by the first signal conversion device 301 and the second signal conversion device 303 may include at least one of Ethernet, CAN, serial communication, or any combination thereof.

As described above, the signal conversion system 300 may perform operations by encrypting a signal transmitted from the vehicle 310 within the signal conversion system 300. The signal conversion system 300 may perform operations based on encrypted signals within the signal conversion system 300 to improve confidentiality and security.

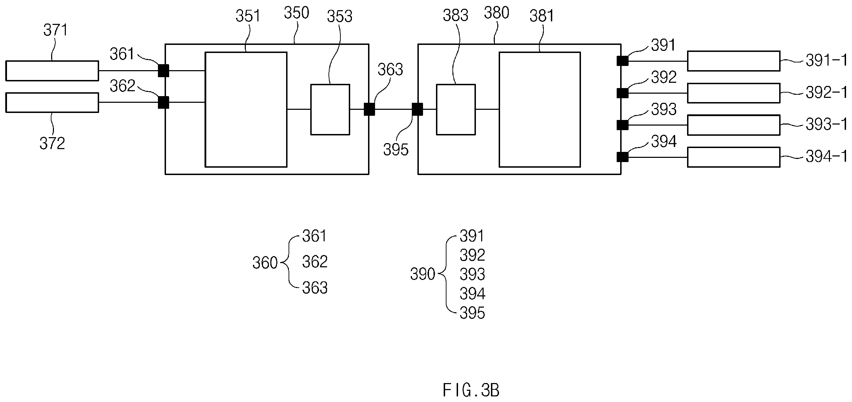

FIG. 3B shows an example of a signal conversion system according to one embodiment of the present disclosure.

Referring to FIG. 3B, in one embodiment, a signal conversion system (e.g., the signal conversion system 300 of FIG. 3A) may include a first signal conversion device 350 (e.g., the first signal conversion device 301 of FIG. 3A) and/or a second signal conversion device 380 (e.g., the second signal conversion device 303 of FIG. 3A) .

In one embodiment, the first signal conversion device 350 may include a first processor 351 and/or a first encryption engine 353. The first signal conversion device 350 may include a plurality of ports 360. For example, the first signal conversion device 350 may receive a signal from a vehicle via the plurality of ports 360.

For example, the first signal conversion device 350 may receive a signal 371 related to the state of the vehicle, including a B+ signal, an Ig 1 signal, and/or an Ig 2 signal, from the vehicle via a first port 361. For example, the first signal conversion device 350 may receive a signal 372 related to a vehicle network via a second port 362. Although two ports connected to the vehicle are shown in FIG. 3B, embodiments are not limited thereto.

In one embodiment, the first signal conversion device 350 may encrypt a signal received from the vehicle based on the first encryption engine 353. The first signal conversion device 350 may transmit an encrypted signal to the second signal conversion device 380 via a third port 363.

In one embodiment, the second signal conversion device 380 may include a second processor 381 and/or a second encryption engine 383.

In one embodiment, the second signal conversion device 380 may include a plurality of ports 390. For example, the second signal conversion device 380 may be connected to the first signal conversion device 350 and/or an external electronic device (e.g., the special equipment controller 320 of FIG. 3A) via the plurality of ports 390.

In one embodiment, the second signal conversion device 380 may transmit a signal 391-1 using the CAN protocol to the external electronic device via a fourth port 391. The second signal conversion device 380 may transmit a signal 392-1 using the RS232 protocol via a fifth port 392. The second signal conversion device 380 may transmit a signal 393-1 using analog I/O via a sixth port 393. The second signal conversion device 380 may transmit a signal 394-1 using another interface via a seventh port 394.

In one embodiment, the second signal conversion device 380 may receive an encrypted signal from the first signal conversion device 350 via an eighth port 395. The second signal conversion device 380 may decrypt the encrypted signal received from the first signal conversion device 350 based on the second encryption engine 383.

For example, the second signal conversion device 380 may convert the decrypted signal into a signal of which transmission and reception are possible via one of the fourth port 391 to the seventh port 394. For example, the second signal conversion device 380 may convert the decrypted signal into a signal of a protocol through which transmission and reception are possible via a port to which an external electronic device is connected, by identifying the external electronic device connected to one of the fourth port 391 to the seventh port 394.

As described above, in one embodiment, the first signal conversion device 350 and the second signal conversion device 380 included in the signal conversion system may transmit and/or receive an encrypted signal within the signal conversion system. Thus, the confidentiality and security of signals transmitted from the vehicle may be improved. In addition, the first signal conversion device 350 and the second signal conversion device 380 may convert a signal for executing a specified function by an external electronic device based on the signal transmitted from the vehicle and may enhance the user experience by transmitting the converted signal.

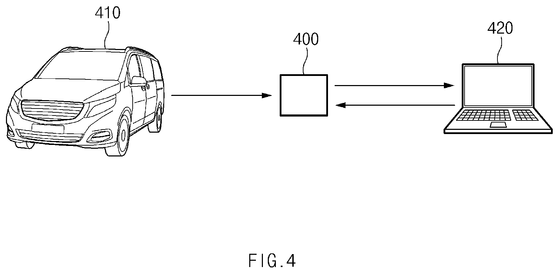

FIG. 4 shows an example of a signal conversion device according to one embodiment of the present disclosure.

Referring to FIG. 4, a signal conversion device 400 according to one embodiment may establish a communication link with a vehicle 410 and/or an external electronic device 420 through a communication circuit (the communication circuit 120).

For example, the external electronic device 420 in FIG. 4 may include a terminal that is owned by a user. For example, the terminal may include a personal computer (PC) including laptops and desktops, a smartphone, a smartpad, a tablet PC, a smart watch, and/or smart accessories including a head-mounted device (HMD).

The signal conversion device 400 according to one embodiment may receive a vehicle control signal provided from the vehicle 410. The signal conversion device 400 may store information related to the vehicle control signal provided from the vehicle 410.

For example, the signal conversion device 400 may be connected to the external electronic device 420 to map the vehicle control signal provided from the vehicle 410 to a signal for executing a function specified by an external electronic device (e.g., a special equipment controller) different from the external electronic device 420.

For example, the signal conversion device 400 may map the vehicle control signals to the special equipment control signal to execute a function specified by the special equipment controller, in correspondence with the vehicle control signal provided by the vehicle 410, from the external electronic device 420 while being connected to the external electronic device 420.

For example, the signal conversion device 400 may perform reverse engineering on the vehicle control signal provided by the vehicle 410. For example, the signal conversion device 400 may analyze a function executed in the vehicle corresponding to the vehicle control signal by performing reverse engineering on the vehicle control signal. The signal conversion device 400 may select the specified function to be executed by the special equipment controller and corresponding to the function executed in the vehicle, by analyzing the function executed in the vehicle and corresponding to the vehicle control signal.

For example, the external electronic device 420 may customize the function to be executed in the special equipment controller through the signal conversion device 400. The signal conversion device 400 may select a signal to be transmitted from each of the ports included in the signal conversion device 400 by the external electronic device 420. In addition, the signal conversion device 400 may set a protocol to be used in each of the ports included in the signal conversion device 400 by the external electronic device 420.

The signal conversion device 400 may further include a plurality of ports. For example, protocols for signals to be transmitted via the plurality of ports by the external electronic device 420 may be set for the plurality of ports.

As described above, the signal conversion device 400 according to one embodiment may enhance user experience by performing customization by the user and providing a user-desired function through the vehicle and/or the special equipment controller.

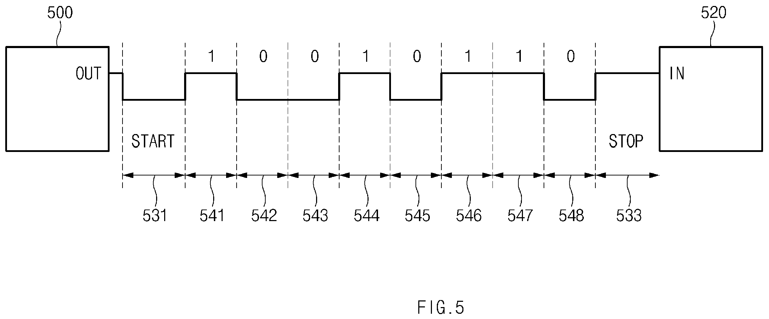

FIG. 5 shows an example of a signal transmitted to an external electronic device by a signal conversion device according to one embodiment of the present disclosure.

Referring to FIG. 5, a signal conversion device 500 according to one embodiment may transmit a signal to an external electronic device 520 (e.g., a special equipment controller) through a communication circuit (e.g., the communication circuit 120 of FIG. 1).

For example, a signal transmitted from the signal conversion device 500 may have a specified size (e.g., about 8 bits). For example, the signal conversion device 500 may convert a CAN signal (or a CAN message) transmitted from the vehicle into a binary format.

The signal conversion device 500 according to one embodiment may transmit the CAN signal converted into the binary format through a universal asynchronous receiver/transmitter (UART_TX). UART may be included in the serial communication protocol. UART may be used to asynchronously transmit a signal transmitted from the signal conversion device 500 to the external electronic device 520.

The example of FIG. 5 may include an example of a CAN signal converted to the binary format. In the example of FIG. 5, the CAN signal converted to the binary format may be expressed as '10010110'.

When transmitting a signal converted to the binary format to the external electronic device 420, the signal conversion device 500 may transmit the CAN signal converted into the binary format, including a start signal and an end signal.

For example, the start signal may have a first size 531, and the end signal may have a second size 533 that is the same as the first size 531. For example, the first size 531 and the second size 533 may include the size of approximately 1.5 bits.

For example, each bit 541, 542, 543, 544, 545, 546, 547, or 548 included in the CAN signal converted to the binary format may have a size of 1 bit.

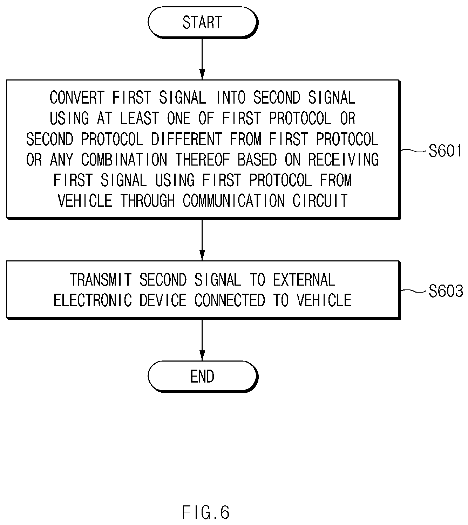

FIG. 6 shows an example of a flowchart related to a signal conversion method according to one embodiment of the present disclosure.

Hereinafter, it is assumed that the signal conversion device 100 of FIG. 1 performs the process of FIG. 6. In addition, in the description of FIG. 6, operations described as being performed by a device may be understood as being controlled by the processor 110 of the signal conversion device 100.

At least one of the operations in FIG. 6 may be performed by the signal conversion device 100 in FIG. 1. At least one of the operations in FIG. 6 may be controlled by the processor 110 in FIG. 1. The operations in FIG. 6 may be performed sequentially but is not necessarily performed sequentially. For example, the order of the operations may be changed, and at least two operations may be performed in parallel.

Referring to FIG. 6, in operation S601, a signal conversion method according to one embodiment may include converting a first signal into a second signal using at least one of a first protocol, a second protocol different from the first protocol, or any combination thereof, by receiving a signal using a first protocol from a vehicle through a communication circuit.

For example, the first protocol may include at least one of CAN (controller area network), LIN (local interconnect network), Ethernet, or any combination thereof.

For example, the second protocol may include at least one of RS-232, RS-232C, RS-422, RS-485, or analog input/output (I/O), or any combination thereof.

According to one embodiment, the signal conversion method may include identifying a protocol through which transmission and reception are possible via a port to which an external electronic device is connected among the first protocol, the second protocol, or any combination thereof, by identifying the port to which the external electronic device is connected. For example, the signal conversion method may include converting a first signal to a second signal using a protocol through which transmission and reception are possible.

According to one embodiment, the signal conversion method may include converting the first signal to the second signal based on a conversion table stored in a memory.

According to one embodiment, the signal conversion method may include encrypting the first signal. For example, the signal conversion method may include encrypting the first signal, based on an encryption engine. For example, the signal conversion method may include, by encrypting the first signal, converting an encrypted first signal to a second signal.

According to one embodiment, the signal conversion method may include encrypting the first signal based on at least one of a symmetric key algorithm, a public key algorithm, or any combination thereof. The signal conversion method may include, by encrypting the first signal, converting an encrypted first signal to a second signal.

According to one embodiment, the signal conversion method may include receiving a user input from an external electronic device for executing a specified function. For example, the signal conversion method may include receiving, through a communication circuit, a user input from an external electronic device for executing a specified function. The signal conversion method may include, by receiving the user input, searching for a first signal corresponding to the specified function in the vehicle.

The signal conversion method may include converting the searched first signal into a second signal that causes the specified function to be executed in the external electronic device. The signal conversion method may include transmitting the second signal to the external electronic device.

In operation S603, the signal conversion method according to one embodiment may include transmitting the second signal to an external electronic device (e.g., a special equipment controller, or a terminal) connected to the vehicle.

According to one embodiment, the signal conversion method may include identifying an identifier assigned to the external electronic device. The signal conversion method may include transmitting the second signal to the external electronic device, by identifying that the external electronic device is accessible to the vehicle through the identifier.

In one embodiment, the identifier assigned to the external electronic device may include at least one of a unique device identifier assigned to the external electronic device, a manufacturer identifier associated with a manufacturer that has manufactured the external electronic device, or any combination thereof.

According to one embodiment, the signal conversion method may include expressing the second signal in a binary format. For example, the signal conversion method may include expressing the second signal in a binary format and transmitting the second signal in the binary format to an external electronic device in bit units.

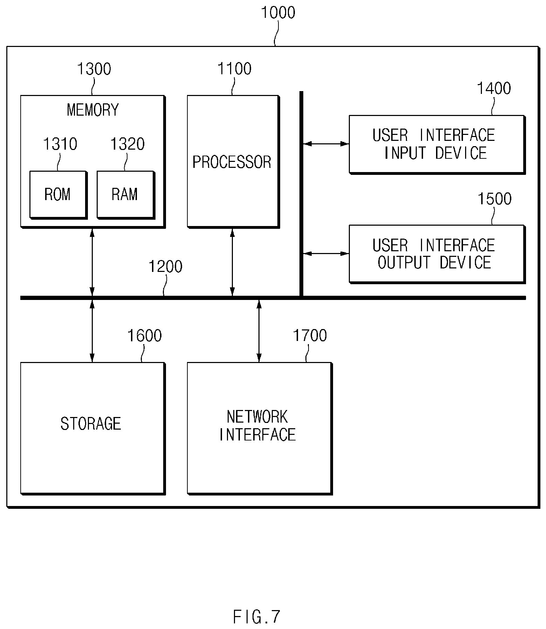

FIG. 7 illustrates a computing system related to a signal conversion device or a signal conversion method according to one embodiment of the present disclosure.

Referring to FIG. 7, a computing system 1000 may include at least one processor 1100, a memory 1300, a user interface input device 1400, a user interface output device 1500, storage 1600, and a network interface 1700, which are connected to each other via a bus 1200.

The processor 1100 may be a central processing unit (CPU) or a semiconductor device that processes instructions stored in the memory 1300 and/or the storage 1600. The memory 1300 and the storage 1600 may include various types of volatile or non-volatile storage media. For example, the memory 1300 may include a Read Only Memory (ROM) 1310 and a Random Access Memory (RAM) 1320.

Thus, the operations of the method or the algorithm described in connection with the embodiments disclosed herein may be embodied directly in hardware, a software module executed by the processor 1100, or in a combination thereof. The software module may reside on a storage medium (i.e., the memory 1300 or the storage 1600) such as a RAM 1320, a flash memory, a ROM 1310, an EPROM, an EEPROM, a register, a hard disk, a removable disk, and a CD-ROM.

The storage medium may be coupled to the processor 1100, and the processor 1100 may read information out of the storage medium and may record information in the storage medium. Alternatively, the storage medium may be integrated with the processor 1100. The processor and the storage medium may reside in an application specific integrated circuit (ASIC). The ASIC may reside within a user terminal. In another case, the processor and the storage medium may reside in the user terminal as separate components.

The above description merely illustrates the technical idea of the present disclosure. Various modifications and variations may be made without departing from the essential characteristics of the present disclosure by those having ordinary skill in the art to which the present disclosure pertains.

Accordingly, the embodiment disclosed in the present disclosure is not intended to limit the technical idea of the present disclosure but to describe the present disclosure, and the scope of the technical idea of the present disclosure is not limited by the embodiment. The scope of protection of the present disclosure should be interpreted by the following claims.

The present technology may convert a signal transmitted from a vehicle into a signal using a protocol used by a special equipment controller.

Further, the present technology may reduce costs for producing various special equipment vehicles by converting a signal transmitted from a vehicle into a signal used by a special equipment controller.

Further, the present technology may provide a vehicle capable of being customized by a user by mapping a user-desired function to a vehicle control signal.

In addition, various effects may be provided that are directly or indirectly understood through the present disclosure.

Hereinabove, although the present disclosure has been described with reference to embodiments and the accompanying drawings, the present disclosure is not limited thereto. The present disclosure may be variously modified and altered by those having ordinary skill in the art to which the present disclosure pertains without departing from the scope of the present disclosure claimed in the following claims.
- 100:: SIGNAL COVERSION DEVICE
- 110:: PROCESSOR
- 120:: COMMUNICATION CIRCUIT
- 130:: MEMORY

- 200:: SIGNAL CONVERSION DEVICE
- 210:: VEHICLE
- 220:: SPECIAL EQUIPMENT CONTROLLER

- 200-1:: SIGNAL CONVERSION DEVICE
- 210-1:: VEHICLE
- 220-1:: SPECIAL EQUIPMENT CONTROLLER

- 250:: SIGNAL CONVERSION DEVICE
- 251:: PROCESSOR
- 253:: ENCRYPTION ENGINE
- 260:: PORTS
- 261:: FIRST PORT
- 262:: SECOND PORT
- 263:: THIRD PORT
- 264:: FOURTH PORT
- 265:: FIFTH PORT
- 266:: SIXTH PORT
- 271:: SIGNAL
- 272:: SIGNAL
- 273:: SIGNAL
- 274:: SIGNAL
- 275:: SIGNAL
- 276:: SIGNAL

- 300:: SIGNAL CONVERSION SYSTEM
- 301:: FIRST SIGNAL CONVERSION DEVICE
- 303:: SECOND SIGNAL CONVERSION DEVICE
- 310:: VEHICLE
- 320:: SPECIAL EQUIPMENT CONTROLLER

- 350:: FIRST SIGNAL CONVERSION DEVICE
- 351:: FIRST PROCESSOR
- 353:: FIRST ENCRYPTION ENGINE
- 360:: PORTS
- 361:: FIRST PORT
- 362:: SECOND PORT
- 363:: THIRD PORT
- 371:: SIGNAL
- 372:: SIGNAL
- 380:: SECOND SIGNAL CONVERSION DEVICE
- 381:: SECOND PROCESSOR
- 383:: SECOND ENCRYPTION ENGINE
- 390:: PORTS
- 391:: FIRST PORT
- 392:: SECOND PORT
- 393:: THIRD PORT
- 394:: FOURTH PORT
- 395:: FIFTH PORT
- 391-1:: SIGNAL
- 392-1:: SIGNAL
- 393-1:: SIGNAL
- 394-1:: SIGNAL

- 400:: SIGNAL CONVERSION DEVICE
- 410:: VEHICLE
- 420:: EXTERNAL ELECTRONIC DEVICE

- 500:: SIGNAL CONVERSION DEVICE
- 520:: EXTERNAL ELECTRONIC DEVICE
- 531:: FIRST SIZE
- 533:: SECOND SIZE
- 541:: BIT
- 542:: BIT
- 543:: BIT
- 545:: BIT
- 546:: BIT
- 547:: BIT
- 548:: BIT
- 1100:: PROCESSOR
- 1300:: MEMORY
- 1400:: USER INTERFACE INPUT DEVICE
- 1500:: USER INTERFACE OUTPUT DEVICE
- 1600:: STORAGE
- 1700:: NETWORK INTERFACE

## Claims

1. A signal conversion device (100), comprising:
a communication circuit (120); and
a processor (110) configured to:
convert a first signal into a second signal using at least one of a first protocol, a second protocol different from the first protocol, or any combination thereof, by receiving the first signal using the first protocol from a vehicle through the communication circuit, and
transmit the second signal to an external electronic device connected to the vehicle,
wherein the first signal includes:
a vehicle control signal generated by the vehicle, and
the vehicle control signal corresponds to a specified function executed by the external electronic device,
wherein the second signal includes a message for allowing the external electronic device to execute the specified function, and
wherein the external electronic device includes a special equipment vehicle controller including a controller for executing additional functions that are different from a default functions of the vehicle.

2. The signal conversion device of claim 1, wherein the processor is configured to:
identify a protocol through which transmission and reception are possible via a port to which the external electronic device is connected among the first protocol, the second protocol, or any combination thereof, by identifying the port to which the external electronic device is connected; and
convert the first signal into the second signal using the protocol through which transmission and reception are possible.

3. The signal conversion device of claim 1, wherein the processor is configured to convert the first signal into the second signal based on a conversion table stored in a memory.

4. The signal conversion device of claim 1, wherein the first protocol includes at least one of a controller area network, CAN, a local interconnect network, LIN, Ethernet, or any combination thereof, and
wherein the second protocol includes an RS-232C protocol, an RS-422 protocol, an RS-485 protocol, an analog input/output, I/O, protocol, a near field communication, NFC, protocol, an ultra-wideband, UWB, protocol, a dedicated short-range communication, DSRC, protocol, a wireless access in vehicular environments, WAVE, protocol, a cellular vehicle-to-everything, C-V2X, protocol, a standardized mobile communication protocol, or any combination thereof.

5. The signal conversion device of claim 1, wherein the processor is configured to convert an encrypted first signal into the second signal by encrypting the first signal.

6. The signal conversion device of claim 5, wherein the processor is configured to:
encrypt the first signal based on a symmetric key algorithm, a public key algorithm, or any combination thereof; and
convert the encrypted first signal into the second signal by encrypting the first signal.

7. The signal conversion device of claim 1, wherein the processor is configured to:
identify an identifier assigned to the external electronic device; and
perform, on the second signal, at least one of transmission to the external electronic device, reception from the external electronic device, or any combination thereof, by identifying that the electronic device is accessible to the vehicle through the identifier.

8. The signal conversion device of claim 7, wherein the identifier assigned to the electronic device includes at least one of a unique device identifier assigned to the external electronic device, a manufacturer identifier associated with a manufacturer that has manufactured the external electronic device, or any combination thereof.

9. The signal conversion device of claim 1, wherein the processor is configured to:
search for a first signal corresponding to the specified function in the vehicle by receiving a user input for executing the specified function from the external electronic device;
convert the searched first signal into a second signal that causes the external electronic device to execute the specified function; and
transmit the second signal to the external electronic device.

10. The signal conversion device of claim 1, wherein the processor is configured to express the second signal in a binary format and transmit the second signal in the binary format to the external electronic device in bit units.

11. The signal conversion device of claim 1, further comprising:
a plurality of ports,
wherein protocols are set for signals to be respectively transmitted via the plurality of ports by a second electronic device that is different from the external electronic device included in a first electronic device.

12. A signal conversion method, comprising:
converting, by a processor, a first signal into a second signal using at least one of a first protocol, a second protocol different from the first protocol, or any combination thereof, by receiving the first signal using the first protocol from a vehicle through a communication circuit; and
transmitting, by the processor, the second signal to an external electronic device connected to the vehicle,
wherein the first signal includes a vehicle control signal generated by the vehicle, and the vehicle control signal corresponds to a specified function executed by the external electronic device,
wherein the second signal includes a message for allowing the external electronic device to execute the specified function, and
wherein the external electronic device includes a special equipment vehicle controller including a controller for executing additional functions that are different from a default functions of the vehicle.

13. The signal conversion method of claim 12, further comprising:
identifying a protocol through which transmission and reception are possible via a port to which the electronic device is connected among the first protocol, the second protocol, or any combination thereof, by identifying the port to which the external electronic device is connected; and
converting the first signal into the second signal using the protocol through which transmission and reception are possible.

14. The signal conversion method of claim 12, further comprising:
converting the first signal into the second signal based on a conversion table stored in a memory.

15. The signal conversion method of claim 12, wherein the first protocol includes at least one of a controller area network, CAN, a local interconnect network, LIN, Ethernet, or any combination thereof, and
wherein the second protocol includes an RS-232C protocol, an RS-422 protocol, an RS-485 protocol, an analog input/output, I/O, protocol, a near field communication, NFC, protocol, an ultra-wideband, UWB, protocol, a dedicated short-range communication, DSRC, protocol, a wireless access in vehicular environments, WAVE, protocol, a cellular vehicle-to-everything, C-V2X, protocol, a standardized mobile communication protocol, or any combination thereof.

## Patentansprüche

1. Signalumwandlungsvorrichtung (100), umfassend:
eine Kommunikationsschaltung (120); und
einen Prozessor (110), der eingerichtet ist zum:
Umwandeln eines ersten Signals in ein zweites Signal unter Verwendung mindestens eines von einem ersten Protokoll, einem zweiten Protokoll, das von dem ersten Protokoll verschieden ist, oder einer Kombination davon, durch Empfangen des ersten Signals unter Verwendung des ersten Protokolls von einem Fahrzeug über die Kommunikationsschaltung und
Senden des zweiten Signals an eine externe elektronische Vorrichtung, die mit dem Fahrzeug verbunden ist,
wobei das erste Signal enthält:
ein Fahrzeugsteuersignal, das durch das Fahrzeug generiert wird, und
das Fahrzeugsteuersignal einer spezifizierten Funktion entspricht, die durch die externe elektronische Vorrichtung ausgeführt wird,
wobei das zweite Signal eine Nachricht enthält, die es der externen elektronischen Vorrichtung erlaubt, die spezifizierte Funktion auszuführen, und
wobei die externe elektronische Vorrichtung einen Spezialausrüstungs-Fahrzeug-Controller aufweist, der einen Controller zum Ausführen zusätzlicher Funktionen umfasst, die sich von den Standardfunktionen des Fahrzeugs unterscheiden.

2. Signalumwandlungsvorrichtung nach Anspruch 1, wobei der Prozessor eingerichtet ist zum:
Identifizieren eines Protokolls, durch das ein Senden und Empfangen über einen Port, mit dem die externe elektronische Vorrichtung verbunden ist, möglich sind, aus dem ersten Protokoll, dem zweiten Protokoll oder einer beliebigen Kombination davon durch Identifizieren des Ports, mit dem die externe elektronische Vorrichtung verbunden ist; und
Umwandeln des ersten Signals in das zweite Signal unter Verwendung des Protokolls, durch das ein Senden und Empfangen möglich sind.

3. Signalumwandlungsvorrichtung nach Anspruch 1, wobei der Prozessor dazu eingerichtet ist, das erste Signal auf der Grundlage einer in einem Speicher gespeicherten Konvertierungstabelle in das zweite Signal umzuwandeln.

4. Signalumwandlungsvorrichtung nach Anspruch 1, wobei das erste Protokoll mindestens eines von einem Controller Area Network (CAN), einem Local Interconnect Network (LIN), Ethernet oder eine beliebige Kombination davon umfasst, und
wobei das zweite Protokoll ein RS-232C-Protokoll, ein RS-422-Protokoll, ein RS-485-Protokoll, ein analoges Eingabe/Ausgabe(E/A)-Protokoll, ein Near Field Communication(NFC)-Protokoll, ein Ultra-Wideband(UWB)-Protokoll, ein Dedicated Short-Range Communication(DSRC)-Protokoll, ein Wireless Access in Vehicular Environments(WAVE)-Protokoll, ein Cellular Vehicle-to-Everything(C-V2X)-Protokoll, ein standardisiertes Mobilkommunikationsprotokoll oder eine beliebige Kombination davon umfasst.

5. Signalumwandlungsvorrichtung nach Anspruch 1, wobei der Prozessor dazu eingerichtet ist, ein verschlüsseltes erstes Signal durch Verschlüsseln des ersten Signals in das zweite Signal umzuwandeln.

6. Signalumwandlungsvorrichtung nach Anspruch 5, wobei der Prozessor eingerichtet ist zum:
Verschlüsseln des ersten Signals auf der Grundlage eines symmetrischen Schlüsselalgorithmus, eines öffentlichen Schlüsselalgorithmus oder einer beliebigen Kombination davon; und
Umwandeln des verschlüsselten ersten Signals durch Verschlüsseln des ersten Signals in das zweite Signal.

7. Signalumwandlungsvorrichtung nach Anspruch 1, wobei der Prozessor eingerichtet ist zum:
Identifizieren einer Kennung, die der externen elektronischen Vorrichtung zugewiesen ist; und
Durchführen, an dem zweiten Signal, mindestens eines von Senden an die externe elektronische Vorrichtung, Empfangen von der externen elektronischen Vorrichtung oder einer beliebigen Kombination davon durch Identifizieren, dass die elektronische Vorrichtung über die Kennung für das Fahrzeug zugänglich ist.

8. Signalumwandlungsvorrichtung nach Anspruch 7, wobei die der elektronischen Vorrichtung zugewiesene Kennung mindestens eines von einer eindeutigen Vorrichtungskennung, die der externen elektronischen Vorrichtung zugewiesen ist, einer Herstellerkennung, die mit einem Hersteller verknüpft ist, der die externe elektronische Vorrichtung hergestellt hat, oder eine beliebige Kombination davon umfasst.

9. Signalumwandlungsvorrichtung nach Anspruch 1, wobei der Prozessor eingerichtet ist zum:
Suchen nach einem ersten Signal, das der spezifizierten Funktion in dem Fahrzeug entspricht, durch Empfangen einer Benutzereingabe zum Ausführen der spezifizierten Funktion von der externen elektronischen Vorrichtung;
Umwandeln des gesuchten ersten Signals in ein zweites Signal, das die externe elektronische Vorrichtung veranlasst, die spezifizierte Funktion auszuführen; und
Senden des zweiten Signals an die externe elektronische Vorrichtung.

10. Signalumwandlungsvorrichtung nach Anspruch 1, wobei der Prozessor dazu eingerichtet ist, das zweite Signal in einem Binärformat auszudrücken und das zweite Signal in dem Binärformat in Biteinheiten an die externe elektronische Vorrichtung zu senden.

11. Signalumwandlungsvorrichtung nach Anspruch 1, des Weiteren umfassend:
mehrere Ports,
wobei Protokolle für Signale definiert sind, die jeweils über die mehreren Ports durch eine zweite elektronische Vorrichtung gesendet werden sollen, die nicht die externe elektronische Vorrichtung ist, die in der ersten elektronischen Vorrichtung enthalten ist.

12. Signalumwandlungsverfahren, umfassend:
Umwandeln, durch einen Prozessor, eines ersten Signals in ein zweites Signal unter Verwendung mindestens eines von einem ersten Protokoll, einem zweiten Protokoll, das von dem ersten Protokoll verschieden ist, oder einer Kombination davon, durch Empfangen des ersten Signals unter Verwendung des ersten Protokolls von einem Fahrzeug über eine Kommunikationsschaltung; und
Senden, durch den Prozessor, des zweiten Signals an eine externe elektronische Vorrichtung, die mit dem Fahrzeug verbunden ist,
wobei das erste Signal ein Fahrzeugsteuersignal umfasst, das durch das Fahrzeug generiert wird, und das Fahrzeugsteuersignal einer spezifizierten Funktion entspricht, die durch die externe elektronische Vorrichtung ausgeführt wird, wobei das zweite Signal eine Nachricht enthält, die es der externen elektronischen Vorrichtung erlaubt, die spezifizierte Funktion auszuführen, und
wobei die externe elektronische Vorrichtung einen Spezialausrüstungs-Fahrzeug-Controller aufweist, der einen Controller zum Ausführen zusätzlicher Funktionen umfasst, die sich von den Standardfunktionen des Fahrzeugs unterscheiden.

13. Signalumwandlungsverfahren nach Anspruch 12, des Weiteren umfassend:
Identifizieren eines Protokolls, durch das ein Senden und Empfangen über einen Port, mit dem die externe elektronische Vorrichtung verbunden ist, möglich sind, aus dem ersten Protokoll, dem zweiten Protokoll oder einer beliebigen Kombination davon durch Identifizieren des Ports, mit dem die externe elektronische Vorrichtung verbunden ist; und
Umwandeln des ersten Signals in das zweite Signal unter Verwendung des Protokolls, durch das ein Senden und Empfangen möglich sind.

14. Signalumwandlungsverfahren nach Anspruch 12, des Weiteren umfassend:
Umwandeln des ersten Signals in das zweite Signal auf der Grundlage einer in einem Speicher gespeicherten Konvertierungstabelle.

15. Signalumwandlungsverfahren nach Anspruch 12, wobei das erste Protokoll mindestens eines von einem Controller Area Network (CAN), einem Local Interconnect Network (LIN), Ethernet oder eine beliebige Kombination davon umfasst, und
wobei das zweite Protokoll ein RS-232C-Protokoll, ein RS-422-Protokoll, ein RS-485-Protokoll, ein analoges Eingabe/Ausgabe (E/A)-Protokoll, ein Near Field Communication (NFC)-Protokoll, ein Ultra-Wideband (UWB)-Protokoll, ein Dedicated Short-Range Communication (DSRC)-Protokoll, ein Wireless Access in Vehicular Environments (WAVE)-Protokoll, ein Cellular Vehicle-to-Everything (C-V2X)-Protokoll, ein standardisiertes Mobilkommunikationsprotokoll oder eine beliebige Kombination davon umfasst.

## Revendications

1. Dispositif de conversion de signaux (100), comprenant :
un circuit de communication (120) ; et
un processeur (110) configuré pour :
convertir un premier signal en un deuxième signal utilisant au moins l'un parmi un premier protocole, un deuxième protocole différent du premier protocole ou toute combinaison de ceux-ci, en recevant le premier signal utilisant le premier protocole depuis un véhicule via le circuit de communication, et
transmettre le deuxième signal à un dispositif électronique externe connecté au véhicule,
dans lequel le premier signal inclut :
un signal de commande de véhicule généré par le véhicule, et
le signal de commande de véhicule correspond à une fonction spécifiée exécutée par le dispositif électronique externe,
dans lequel le deuxième signal inclut un message pour permettre au dispositif électronique externe d'exécuter la fonction spécifiée, et
dans lequel le dispositif électronique externe inclut un contrôleur de véhicule à équipement spécial incluant un contrôleur pour exécuter des fonctions supplémentaires qui sont différentes de fonctions par défaut du véhicule.

2. Dispositif de conversion de signaux selon la revendication 1, dans lequel le processeur est configuré pour :
identifier un protocole par lequel la transmission et la réception sont possibles via un port auquel le dispositif électronique externe est connecté parmi le premier protocole, le deuxième protocole ou toute combinaison de ceux-ci, en identifiant le port auquel le dispositif électronique externe est connecté ; et
convertir le premier signal en deuxième signal utilisant le protocole par lequel la transmission et la réception sont possibles.

3. Dispositif de conversion de signaux selon la revendication 1, dans lequel le processeur est configuré pour convertir le premier signal en deuxième signal sur la base d'une table de conversion stockée dans une mémoire.

4. Dispositif de conversion de signaux selon la revendication 1, dans lequel le premier protocole inclut au moins l'un parmi un réseau de zone de contrôleur (CAN), un réseau d'interconnexion local (LIN), Ethernet ou toute combinaison de ceux-ci, et
dans lequel le deuxième protocole inclut un protocole RS-232C, un protocole RS-422, un protocole RS-485, un protocole d'entrée/sortie (I/O) analogique, un protocole de communication en champ proche (NFC), un protocole à bande ultra-large (UWB), un protocole de communication dédiée à courte portée (DSRC), un protocole d'accès sans fil en milieu automobile (WAVE), un protocole cellulaire véhicule-à-tout (C-V2X), un protocole de communication mobile normalisé ou toute combinaison de ceux-ci.

5. Dispositif de conversion de signaux selon la revendication 1, dans lequel le processeur est configuré pour convertir un premier signal crypté en deuxième signal en cryptant le premier signal.

6. Dispositif de conversion de signaux selon la revendication 5, dans lequel le processeur est configuré pour :
crypter le premier signal sur la base d'un algorithme à clé symétrique, d'un algorithme à clé publique ou de toute combinaison de ceux-ci ; et
convertir le premier signal crypté en deuxième signal en cryptant le premier signal.

7. Dispositif de conversion de signaux selon la revendication 1, dans lequel le processeur est configuré pour :
identifier un identifiant attribué au dispositif électronique externe ; et
effectuer, sur le deuxième signal, au moins l'une de transmission vers le dispositif électronique externe, réception depuis le dispositif électronique externe ou toute combinaison de celles-ci, en identifiant que le dispositif électronique est accessible au véhicule via l'identifiant.

8. Dispositif de conversion de signaux selon la revendication 7, dans lequel l'identifiant attribué au dispositif électronique inclut au moins l'un parmi un identifiant de dispositif unique attribué au dispositif électronique externe, un identifiant de fabricant associé à un fabricant ayant fabriqué le dispositif électronique externe ou toute combinaison de ceux-ci.

9. Dispositif de conversion de signaux selon la revendication 1, dans lequel le processeur est configuré pour :
rechercher un premier signal correspondant à la fonction spécifiée dans le véhicule en recevant une entrée utilisateur pour exécuter la fonction spécifiée depuis le dispositif électronique externe ;
convertir le premier signal recherché en un deuxième signal qui amène le dispositif électronique externe à exécuter la fonction spécifiée ; et
transmettre le deuxième signal au dispositif électronique externe.

10. Dispositif de conversion de signaux selon la revendication 1, dans lequel le processeur est configuré pour exprimer le deuxième signal dans un format binaire et transmettre le deuxième signal dans ce format binaire au dispositif électronique externe en unités de bits.

11. Dispositif de conversion de signaux selon la revendication 1, comprenant en outre :
une pluralité de ports,
dans lequel des protocoles sont définis pour des signaux devant être respectivement transmis via la pluralité de ports par un deuxième dispositif électronique qui est différent du dispositif électronique externe inclus dans un premier dispositif électronique.

12. Procédé de conversion de signaux, consistant à :
convertir, par un processeur, un premier signal en un deuxième signal utilisant au moins l'un parmi un premier protocole, un deuxième protocole différent du premier protocole ou toute combinaison de ceux-ci, en recevant le premier signal utilisant le premier protocole depuis un véhicule via un circuit de communication ; et
transmettre, par le processeur, le deuxième signal à un dispositif électronique externe connecté au véhicule,
dans lequel le premier signal inclut un signal de commande de véhicule généré par le véhicule, et le signal de commande de véhicule correspond à une fonction spécifiée exécutée par le dispositif électronique externe,
dans lequel le deuxième signal inclut un message pour permettre au dispositif électronique externe d'exécuter la fonction spécifiée, et
dans lequel le dispositif électronique externe inclut un contrôleur de véhicule à équipement spécial incluant un contrôleur pour exécuter des fonctions supplémentaires qui sont différentes de fonctions par défaut du véhicule.

13. Procédé de conversion de signaux selon la revendication 12, consistant en outre à :
identifier un protocole par lequel la transmission et la réception sont possibles via un port auquel le dispositif électronique est connecté parmi le premier protocole, le deuxième protocole ou toute combinaison de ceux-ci, en identifiant le port auquel le dispositif électronique externe est connecté ; et
convertir le premier signal en deuxième signal utilisant le protocole par lequel la transmission et la réception sont possibles.

14. Procédé de conversion de signaux selon la revendication 12, consistant en outre à :
convertir le premier signal en deuxième signal sur la base d'une table de conversion stockée dans une mémoire.

15. Procédé de conversion de signaux selon la revendication 12, dans lequel le premier protocole inclut au moins l'un parmi un réseau de zone de contrôleur (CAN), un réseau d'interconnexion local (LIN), Ethernet ou toute combinaison de ceux-ci, et
dans lequel le deuxième protocole inclut un protocole RS-232C, un protocole RS-422, un protocole RS-485, un protocole d'entrée/sortie (I/O) analogique, un protocole de communication en champ proche (NFC), un protocole à bande ultra-large (UWB), un protocole de communication dédiée à courte portée (DSRC), un protocole d'accès sans fil en milieu automobile (WAVE), un protocole cellulaire véhicule-à-tout (C-V2X), un protocole de communication mobile normalisé ou toute combinaison de ceux-ci.
